# EUROPÄISCHE PATENTSCHRIFT

(11) **EP 1 033 821 B1**
(45) Veröffentlichungstag und Bekanntmachung des Hinweises auf die Patenterteilung: **20.02.2008**
(21) Anmeldenummer: 00103883.5
(22) Anmeldetag: 24.02.2000
(51) Int. Cl.: H04B 1/38, H04B 1/18, H01Q 1/24

(54) **DECT-Funkmodul**
DECT transceiver module
Module d'émission-réception DECT

(30) Priorität: 02.03.1999 DE 29903715 U
(43) Veröffentlichungstag der Anmeldung: 06.09.2000
(73) Patentinhaber: Fraunhofer-Gesellschaft zur Förderung der angewandten Forschung e.V., 80686 München (DE)
(72) Erfinder: Hupp, Jürgen, 90425 Nürnberg (DE); Rebhan, Klaus, 91052 Erlangen (DE); Nöther, Frank, 90443 Nürnberg (DE); Störmer, Udo, D - 76297 Stutensee-Blankenloch (DE); Kleinhenz, Thomas, 90439 Nürnberg (DE); Heuberger, Albert, 91056 Erlangen (DE); Wansch, Rainer, 91052 Erlangen (DE); Tittel, Martin, 91301 Forchheim (DE); Gerhäuser, Heinz, 91344 Waischenfeld (DE)
(74) Vertreter: Schoppe, Fritz

(56) Entgegenhaltungen:
- EP-A- 0 843 376
- GB-A- 2 316 540
- US-A- 5 550 554

## Beschreibung

Die vorliegende Erfindung bezieht sich auf DECT-Komponenten und insbesondere auf ein DECT-Funkmodul.

Ein DECT-Funkmodul erlaubt die drahtlose Datenkommunikation zwischen einer Basis- und einer oder mehreren Mobilstationen. Die Übertragung erfolgt konform zu dem ETSI DECT-Standard. Durch den vorgeschriebenen Zugriffsmechanismus auf das Funkmedium werden gegenseitige Störungen weitgehend ausgeschlossen. Eine sichere Datenübertragung kann durch den Einsatz eines Fehlersicherungsprotokolls erreicht werden. Für die Abstrahlung sowie den Empfang des hochfrequenten Signals eines DECT-Funkmoduls werden Antennen eingesetzt, die für den Frequenzbereich von 1880 MHz bis 1900 MHz geeignet sind.

Bekannte DECT-Funkmodule sind mit einer oder zwei Antennen bzw. Antennenanschlüssen ausgestattet. Der Einsatz einer zweiten Antenne ermöglicht einen Diversity-Empfang. Bisherige DECT-Kommunikationseinrichtungen bieten entweder nur die Möglichkeit, mittels eines hochfrequenztauglichen Steckverbinders direkt oder über ein Verbindungskabel Antennen anzuschließen, oder sie sind mit dielektrischen Chipantennen ausgestattet. Diese dielektrischen Chipantennen sind spezielle Bauteile, die direkt auf der Leiterplatte durch Löten angebracht werden. Außerdem können Antennen direkt am DECT-Funkmodul mittels separater Draht- oder Koaxialkabelanordnungen realisiert werden. Die Verbindung einer separaten Antenne mit der Hauptplatine des DECT-Funkmoduls erfolgt über eine Lötverbindung oder über eine Klemmverbindung, bei der ein Ende einer separaten Antenne auf einen Bereich der Leiterplatte gepreßt wird, an dem das Hochfrequenzsignal anliegt, derart, daß eine leitfähige Verbindung zwischen der Antenne und dem Hochfrequenz-Ausgang der Hauptplatine erreicht wird.

Solche bekannten DECT-Funkmodule haben allesamt den Nachteil, daß der Aufbau insbesondere aufgrund der Befestigung der separaten Antenne aufwendig und fehleranfällig ist. Darüberhinaus muß berücksichtigt werden, daß DECT-Funkmodule üblicherweise bei Benutzern zum Einsatz kommen, von denen im allgemeinen kein allzu großer hochfrequenztechnischer Sachverstand erwartet werden kann. Daher sind separate Antennenkonstruktionen nachteilhaft, da sie einerseits relativ leicht zugänglich sind und andererseits empfindlich sind. Außerdem muß ein Anwender eines DECT-Funkmoduls mit separater Antenne nach dem Kauf des Moduls zunächst einige Zusammenbauoperationen ausführen, was für viele Benutzer unerfreulich ist, da sie den Anspruch haben, ein Gerät einzuschalten und zu betreiben, ohne daß es erforderlich ist, unter Umständen lange komplizierte Gebrauchsanleitungen studieren zu müssen, um anschließend Einzelteile korrekt zusammenbauen zu können.

Für die Hersteller von DECT-Funkmodulen ergibt sich ferner der Nachteil, daß, wie es bereits erwähnt wurde, das Herstellungsverfahren aufwendiger wird, da die Antenne separat behandelt werden muß, und daß neben einem DECT-Konformitätstest des Funkmoduls ferner Nachtests für die jeweilige spätere Antennenausführung durchgeführt werden müssen.

Die EP 0843376 A2 offenbart ein tragbares Funkgerät mit einer internen Antenne und einer externen ausziehbaren Antenne. Auf einer Schaltungsplatine ist eine Funkschaltung vorgesehen, die mit einem Umschalter verbunden ist, der einen Ausgang hat, welcher mit einem Speisepunkt des internen Antennenelements verbunden ist, und der einen anderen Umschalter hat, der mit einem Speisungsabschnitt des externen Antennenelements verbunden ist. Ferner sind Metall-Fittings vorgesehen, um zu detektieren, ob die externe Antenne ausgezogen ist oder nicht. Wenn sie nicht ausgezogen ist, verbindet der Umschalter den Ausgang für das interne Antennenelement mit seinem Eingang, während dann, wenn die externe Antenne ausgezogen ist, der Ausgang für die externe Antenne mit dem Eingang des Umschalters verbunden wird. Die Steuerung des Umschalters erfolgt über die Metall-Fittings. Die externe Antenne ist in einem externen Antennenzylinder untergebracht, der auf der Unterseite der Platine angebracht ist, während die interne Antenne einen Masseabschnitt hat, der auf der Oberseite der Platine angebracht ist, wobei eine Kurzschlussplatte, ein Speisungsabschnitt und ein Antennenelement der internen Antennen oberhalb der Platine angebracht sind und von der Platine senkrecht nach oben vorstehen.

Die Aufgabe der vorliegenden Erfindung besteht darin, ein kostengünstiges und zuverlässiges Funkmodul zu schaffen, das nach dem DECT-Standard oder einem Derivat desselben arbeitet.

Diese Aufgabe wird durch ein Funkmodul nach Patentanspruch 1 gelöst.

Der vorliegenden Erfindung liegt die Erkenntnis zugrunde, daß der wesentliche Nachteil bestehender DECT-Funkmodule in der separaten Antennenanordnung liegt, die zu den bereits beschriebenen Nachteilen führt. Erfindungsgemäß wird daher diese hybride Ansatz verlassen und ein integrierter Aufbau eingesetzt. Bei diesem integrierten Aufbau wird die Antenne direkt auf bzw., falls eine Mehrschichtplatine verwendet wird, in der Platine als Planarantenne realisiert. Damit ist es möglich, auf sehr kostengünstige und konstruktiv einfache Art DECT-Funkmodule mit Antennen auszustatten. Solche DECT-Funkmodule sind als universell verwendbare Module insbesondere zum Einbau in mobile Endgeräte konzipiert. Aufgrund der Tatsache, daß der Markt für Geräte gemäß dem ETSI DECT-Standard ein Consumer-Markt ist, besteht für DECT-Funkmodule ein starker Kostendruck einerseits und ein starker Qualitätsdruck andererseits. Nur kostengünstige und qualitativ hochwertige Produkte können sich gerade auf diesem Markt durchsetzen.

Ein DECT-Funkmodul gemäß der vorliegenden Erfindung umfaßt eine Platine, eine aktive Schaltungsanordnung, die auf der Platine angeordnet ist, eine integrierte Planarantenne, die als Metallisierungsstruktur auf und/oder in der Platine ausgeführt ist und mit der aktiven Schaltungsanordnung koppelbar ist, und eine Abschirmung zum Abschirmen der aktiven Schaltungsanordnung.

Damit entfallen die Einbauschritte zum Anbringen der separaten Antennenanordnung auf der Hauptplatine. Dies führt zu folgenden Vorteilen:
- Das DECT-Modul ist beim Anwender schnell einsatzfähig, da keine Kabel oder Antennen mehr montiert werden müssen. Der Anwender benötigt daher keinerlei Sachverstand, um das einmal gekaufte DECT-Modul gewissermaßen fertigzustellen.
- Das DECT-Modul ist für den Anwender und für den Hersteller kostengünstig, da keine externen Komponenten, wie z. B. Kabel, Steckverbinder, Antennen, etc., beschafft werden müssen.
- Das DECT-Modul ist mechanisch stabil herstellbar, da keine Drähte oder ähnliches als Antennen verwendet werden müssen. Die als Metallisierungsstruktur auf der Platine hergestellte Planarantenne ist mechanisch robust und bietet auch für relativ hochfrequenztechnisch unerfahrene Anwender nahezu keinen Angriffspunkt, der zu einer unbeabsichtigten mechanischen Beschädigung oder Zerstörung der Planarantenne führen könnte.
- Das DECT-Modul ist schneller und vor allem kostengünstiger zu fertigen, da keine zusätzlichen Bauteile, wie z. B. Chipantennen, Antennensteckverbinder oder externe Antennen, zugekauft und bestückt werden müssen.
- Das DECT-Modul kann einem einzigen DECT-Konformitätstest unterzogen werden, ohne daß Nachtests für eine jeweilige spätere Antennenausführung durchgeführt werden müssen.
- Planarantennen sind bezüglich ihrer Eigenschaften, wie z. B. Impedanz, Antennengewinn und Abstrahlverhalten, in sehr großen Grenzen variierbar, derart, daß ein Optimum für jeden beliebigen Anwendungsbereich gefunden werden kann, ohne daß dies zu einer wesentlichen Veränderung bzw. Verteuerung des Herstellungsverfahrens führen würde. Darüberhinaus sind Planarantennen platzsparend.

Bevorzugte Ausführungsbeispiele der vorliegenden Erfindung werden nachfolgend bezugnehmend auf die beiliegenden Zeichnungen detailliert erläutert. Es zeigen:
- Fig. 1: eine Draufsicht auf ein erfindungsgemäßes DECT-Funkmodul;
- Fig. 2: eine Draufsicht auf einen Abschnitt eines DECT-Funkmoduls, bei dem wahlweise eine externe Antenne oder eine integrierte Planarantenne angeschlossen werden kann; und
- Fig. 3: eine zu Fig. 2 ähnliche Ansicht, bei der jedoch keine externe Antenne sondern lediglich die integrierte Planarantenne angeschlossen ist.

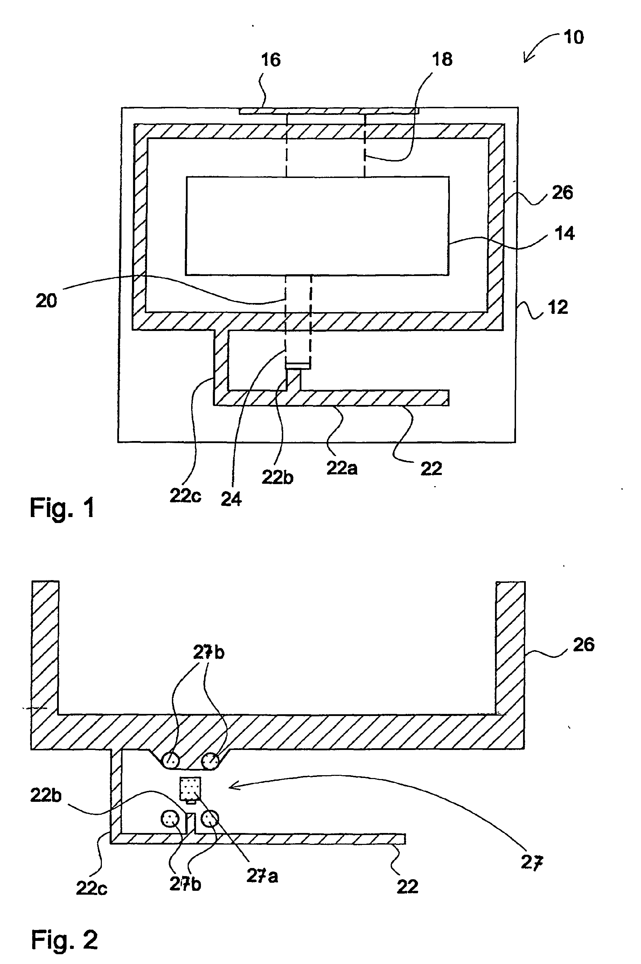

Fig. 1 zeigt eine schematische Draufsicht auf ein DECT-Funkmodul 10 gemäß der vorliegenden Erfindung. Das DECT-Funkmodul umfaßt eine Platine 12, die mit einer aktiven Schaltungsanordnung 14 bestückt ist. Die aktive Schaltungsanordnung ist einerseits mit einem Eingangs/Ausgangs-Anschluß 16 über einen Datenbus 18 verbunden, der in Fig. 1 gestrichelt eingezeichnet ist. Die aktive Schaltungsanordnung 14 ist andererseits über eine Leitung 20 mit einer Planarantenne 22 über eine Anschlußstelle 24 verbindbar.

Zur Abschirmung der aktiven Schaltungsanordnung 14 von der Planarantenne 22 ist ein Masserahmen 26 auf der Platine 12 vorgesehen, auf den ein Gehäuse (in Fig. 1 nicht gezeigt) aufgesetzt und verlötet wird, um das DECT-Funkmodul 10 fertigzustellen. In Fig. 1 ist die Verbindungsleitung 20 zwischen aktiver Schaltungsanordnung 14 und Antenne 22 als gestrichelte Linie gezeigt, um anzudeuten, daß bei einem bevorzugten Ausführungsbeispiel der vorliegenden Erfindung, bei dem die Platine 12 eine Mehrschichtplatine ist, die Streifenleitung 20 in einer anderen Ebene der Mehrschichtplatine 12 als der Masserahmen 26 und die Antenne 22 verläuft. In diesem Fall würde die aktive Schaltungsanordnung 14 mittels einer Durchkontaktierung oder direkt mittels eines Anschlußstiftes mit der Streifenleitung 20 verbunden sein, während die Planarantenne 22 an dem Anschlußpunkt 24 ebenfalls über eine Durchkontaktierung mit der Streifenleitung 20 verbunden ist.

Bei dem in Fig. 1 gezeigten Ausführungsbeispiel der vorliegenden Erfindung ist die Planarantenne 22 als Inverted-F-Antenne ausgeführt, die einen ersten Abschnitt 22a in einer ersten Richtung und einen zweiten Abschnitt 22b sowie einen dritten Abschnitt 22c aufweist, wobei der zweite und der dritte Abschnitt 22b und 22c im wesentlichen senkrecht zu dem ersten Abschnitt 22a der Antenne sind. Inverted-F-Antennen sind in K. Hirasawa und M. Haiishi, "Analysis, Design and Measurement of Small and Low Profile Antennas", Artech House, Boston, London, 1992, beschrieben. Grundsätzlich können Planarantennen als Streifenleitungsresonatoren mit Strahlungsverlusten aufgefaßt werden, wobei die Strahlungsverluste des Resonators das abgestrahlte Signal darstellen.

Wie es bekannt ist, werden Inverted-F-Antennen derart gespeist, daß das abzustrahlende Hochfrequenzsignal in einen Abschnitt, in Fig. 1 den Abschnitt 22b, eingespeist wird, während der andere Abschnitt (in Fig. 1 22c) mit der Masse verbunden ist. Diese Masseverbindung wird bei dem in Fig. 1 gezeigten DECT-Funkmodul derart realisiert, daß die Planarantenne 22 und der Metallisierungsrahmen als eine einzige Metallisierungsstruktur, beispielsweise in Form einer Kupfer-Leiterbahn, bei der Platinenherstellung gemeinsam hergestellt werden, weshalb die Planarantenne 22 auf der Platine integriert ist. Die gesamte Antenne besteht somit aus der Kupferbahn in bzw. auf der Platine 12 und dem Massegegenpol, der durch den Metallisierungsrahmen 26 und ein darauf aufgelötetes Schirmgehäuse beispielsweise aus Blech realisiert ist, der zusätzlich zur Schirmung der aktiven Bauteile des DECT-Funkmoduls vorgesehen ist. Wie es bereits erwähnt wurde, kann die integrierte Planarantenne 22 durch geometrischen Entwurf an verschiedene Situationen angepaßt werden. Dazu gehören beispielsweise die Impedanz, der Antennengewinn und das Abstrahlverhalten. Die Verbindung der Planarantenne 22 zu der im Gehäuse liegenden aktiven Schaltungsanordnung 14 erfolgt bevorzugterweise über den Streifenleiter 20, der in einer anderen Ebene als die Planarantenne bezüglich der Platine 12 ausgeführt sein kann, wie es bereits erwähnt worden ist. Selbstverständlich könnte der Metallisierungsrahmen 26 dort, wo der Streifenleiter 20 verläuft bzw. wo der Verbindungsbus 18 zum Eingangs/Ausgangs-Anschluß 16 verläuft, unterbrochen sein, derart, daß keine unterschiedlichen Ebenen realisiert werden müssen, wenn keine Mehrschichtplatine 12 verwendet wird. Alternativ muß der Masserahmen 26 nicht vollständig umlaufend ausgeführt sein, es ist lediglich erforderlich, daß er z. B. zusammen mit einem angelöteten Gehäusedeckel eine gute Abschirmung zwischen der aktiven Schaltungsanordnung 14 und der Planarantenne 22 ermöglicht. Ferner können selbstverständlich beliebige andere Planarantennen eingesetzt werden. Inverted-F-Antennen werden jedoch aufgrund ihrer kompakten Bauform und definierten Masseverbindung (Abschnitt 22c) für das erfindungsgemäße DECT-Funkmodul bevorzugt.

Fig. 2 zeigt eine Draufsicht auf einen Abschnitt der Platine des DECT-Funkmoduls 10 von Fig. 1. Wieder ist ein in diesem Fall nur hälftig ausgeführter Masserahmen 26 gezeigt. Die Inverted-F-Antenne 22 ist über ihren Abschnitt 22c mit dem Masserahmen 26 verbunden. Der Speiseabschnitt 22b ist bei dem in Fig. 2 dargestellten Ausführungsbeispiel der vorliegenden Erfindung nicht angeschlossen, was durch einen Spalt zwischen dem Abschnitt 22b der Planarantenne 22 und einem Signalleiter 26a einer Antennenbuchse 27 gezeigt ist, die ferner vier Masseabschnitte 27b aufweist. Die beiden oberen Massepunkte 27b sind, wie es in Fig. 2 gezeigt ist, ebenfalls mit dem Masserahmen 26 verbunden. Das in Fig. 2 abschnittsweise gezeigte DECT-Funkmodul 10 hat eine hohe Flexibilität, da die integrierte Planarantenne 22 angeschlossen werden kann, und/oder über die Antennenbuchse 27 eine externe Antenne. Ein derart ausgeführtes DECT-Funkmodul kann flexibel eingesetzt werden, wenn beispielsweise daran gedacht wird, daß über die Antennenbuchse 27 eine Außenantenne beispielsweise eines Fahrzeugs angeschlossen werden könnte, wenn das DECT-Funkmodul innerhalb eines im wesentlichen metallischen Fahrzeugs eingesetzt wird und somit ein durch die Planarantenne 22 ausgestrahltes Hochfrequenzsignal kaum aus dem Fahrzeug herausdringen würde.

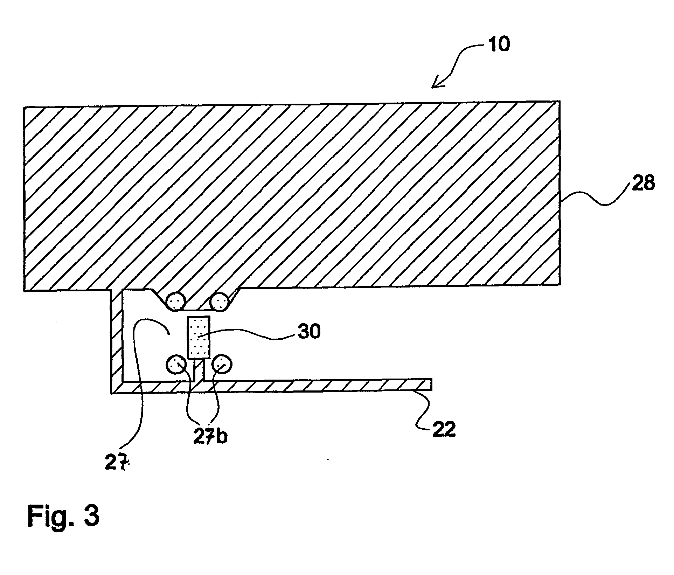

Fig. 3 zeigt eine Draufsicht auf das DECT-Funkmodul 10, auf das nun ein Gehäusedeckel 28 aufgesetzt ist, der mit dem Masserahmen 26 verlötet ist, um eine gute Abschirmungswirkung zu erreichen. Ferner ist im Gegensatz zu Fig. 2 die Planarantenne 22 über eine Brücke 30 an den Signalabschnitt (in Fig. 2 Bezugszeichen 27a) angeschlossen, derart, daß das abzustrahlende bzw. das zu empfangende Hochfrequenzsignal über die Brücke 30 zu der Antenne geleitet bzw. von der Antenne empfangen werden kann. Die Brücke ist derart angeordnet, daß der in Fig. 2 gezeigte Spalt zwischen dem Abschnitt 22b der Planarantenne 22 und dem Signalabschnitt 27a der Hochfrequenz-Antennenbuchse überbrückt ist. Die Brücke 30 kann auf mehrere Arten und Weisen befestigt werden, wobei es bevorzugt wird, dieselbe zu verlöten. Das Löten stellt eine reversibel trennbare Verbindung dar. Alternativ könnte die Brücke jedoch auf die Antennenbuchse aufgesteckt werden und beispielsweise durch eine Federkraft auf dem Speisungspunkt der Antenne 22 aufliegen, um eine elektrische Verbindung mit derselben herzustellen. Die Planarantenne 22 ist in Fig. 3 somit über die Brücke 30, einen Anschlußstift der Antennenbuchse 27 und den Streifenleiter 20 (Fig. 1) mit der aktiven Schaltungsanordnung 14 (Fig. 1) verbunden.

In Abweichung vom beschriebenen Ausführungsbeispiel könnte die Antennenbuchse 27 in Fig. 3 verändert werden, wobei die Brücke 30 in Form eines 0-Ohm-Widerstands dann einerseits an den Speisungspunkt der Planarantenne 22 und andererseits mit einer Anschlußfläche auf der Platine, an der das Hochfrequenzsignal von der aktiven Schaltungsanordnung 14 anliegt, verlötet ist, ohne daß der "Umweg" über einen Anschlußstift der Antennenbuchse 27 gewählt wird. Das Bereitstellen der Antennenbuchse 27 erlaubt jedoch die Möglichkeit, statt der Planarantenne 22 eine externe Antenne anzuschließen. Neben der Antennenbuchse 27 können auch weitere Antennenbuchsen vorgesehen werden, um mehrere Antennen anzuschließen, falls dies gewünscht wird.

Obwohl bisher lediglich von einem DECT-Funkmodul gesprochen wurde, sei angemerkt, daß die vorliegende Erfindung nicht nur auf europäische DECT-Systeme anwendbar ist, die in der Physical Layer ein Band von 1,88 GHz bis 1,9 GHz definieren, sondern auch auf verbindungsorientierte Kommunikationssysteme gemäß sogenannten DECT-Derivaten, wie z. B. das amerikanische Derivat, das im Bereich von etwa 1,92 bis 1,93 GHz arbeitet und als PWT bezeichnet wird. Außerdem existieren auch asiatische DECT-Derivate, die wieder ein anderes Frequenzband haben. Allen DECT-Derivaten ist es gemeinsam, daß die Nachrichtenübertragung nach dem DECT-Standard stattfindet. Sie unterscheiden sich lediglich in den physikalischen Parametern des benutzten Funkfrequenzbands oder in der Modulation, welche sich von Derivat zu Derivat unterscheiden können.

## Patentansprüche

1. Funkmodul (10) zum Arbeiten nach dem DECT-Standard oder einem Derivat desselben, mit folgenden Merkmalen:
einer Platine (12);
einer aktiven Schaltungsanordnung (14), die auf der Platine (12) angeordnet ist; und
einer Antenne (22),
**dadurch gekennzeichnet, dass**
die Antenne (22) eine integrierte Planarantenne (22) ist, die als Metallisierungsstruktur auf und/oder in der Platine (12) ausgeführt ist, wobei die integrierte Planarantenne (22) einen Erdungsabschnitt (22c) und einen Speisungsabschnitt (22b) aufweist;
eine Antennenbuchse (27) zum Koppeln entweder der Planarantenne oder einer externen Antenne für das Funkmodul mit der aktiven Schaltungsanordnung (14) vorgesehen ist, wobei die Antennenbuchse (27) einen Masseabschnitt (27b) und einen von dem Masseabschnitt (27b) elektrisch isolierten Signalabschnitt (27a) aufweist, wobei der Masseabschnitt (27b) und der Signalabschnitt (27a) der Antennenbuchse (27) auf der gleichen Ebene der Platine (12) angeordnet sind, auf der die Planarantenne (22) angeordnet ist;
ein entfernbares Kopplungselement (30) zum elektrisch leitfähigen Verbinden des Signalabschnitts (27a) der Antennenbuchse (27) mit dem Speisungsabschnitt (22b) der Planarantenne (22) vorgesehen ist, um die aktive Schaltungsanordnung (14) mit der Planarantenne (22) zu koppeln; und
eine Abschirmung (26, 28) zum Abschirmen der aktiven Schaltungsanordnung (14) vorgesehen ist, wobei die Abschirmung einen Masserahmen (26) aufweist, der die Planarantenne (22) nicht umgibt und auf der gleichen Ebene der Platine (12) angeordnet ist, auf der die Planarantenne (22) angeordnet ist, wobei der Masserahmen (26) sowohl mit dem Erdungsabschnitt (22c) der Planarantenne (22) als auch mit dem Masseabschnitt (27b) der Antennenbuchse (27) elektrisch leitfähig verbunden ist.

2. Funkmodul (10) nach Anspruch 1, bei dem ein metallischer Gehäusedeckel (28) vorgesehen ist, der elektrisch leitfähig mit dem Masserahmen (26) verbunden ist.

3. Funkmodul (10) nach Anspruch 1 oder 2, bei dem die Platine (12) eine Streifenleitung (20) aufweist, durch die der Speisungsabschnitt (27a) der Antennenbuchse (27) und die aktive Schaltungsanordnung (14) verbunden sind.

4. Funkmodul nach Anspruch 1, bei dem zwischen dem Signalabschnitt (27a) und dem Speisungsabschnitt (22b) der Planarantenne (22) ein Zwischenraum vorhanden ist, der durch das entfernbare Kopplungselement in Form einer Brücke (30) überbrückbar ist.

5. Funkmodul (10) nach einem der vorhergehenden Ansprüche, bei dem die Planarantenne (22) eine Inverted-F-Antenne ist, die einen weiteren Abschnitt (22a) in einer Richtung aufweist, wobei der Speisungsabschnitt und der Erdungsabschnitt dazu im wesentlichen senkrecht sind und sich in einer zu dieser Richtung senkrechten Richtung erstrecken.

6. Funkmodul (10) nach Anspruch 5, bei dem die Abschirmung (26, 28) Teil des Gehäuses des Funkmoduls (10) ist, und bei dem die Inverted-F-Antenne (22) derart ausgeführt ist, dass sich der weitere Abschnitt (22a) im wesentlichen parallel zu einer Seite des Gehäuses erstreckt.

7. Funkmodul nach einem der vorhergehenden Ansprüche, bei dem die aktive Schaltungsanordnung (14) und die Planarantenne (22) derart ausgeführt sind, dass Funkfrequenzen zwischen 1800 MHz und 2000 MHz und insbesondere zwischen 1880 MHz und 1900 MHz nutzbar sind.

8. Funkmodul (10) nach einem der Ansprüche 3 bis 7, bei dem die Platine (12) eine Mehrschichtplatine ist, bei dem die Planarantenne (22) auf einer Schicht der Mehrschichtplatine, die eine Hauptoberfläche der Mehrschichtplatine (12) bildet, ausgeführt ist, bei dem der Masserahmen (26) ebenfalls auf der Hauptoberfläche der Mehrschichtplatine (12) ausgeführt ist, und bei dem die Streifenleitung (20) auf einer anderen Schicht der Platine (12) ausgeführt ist und über eine Durchkontaktierung mit dem Speisungsabschnitt (27a) der Antennenbuchse (27) verbunden ist.

## Claims

1. Radio module (10) for operating according to the DECT standard or a derivative thereof, comprising:
a board (12);
an active circuitry (14) disposed on the board (12); and
an antenna (22),
**characterized in that**
the antenna (22) is an integrated planar antenna (22), which is formed as metalization structure on and/or in the board (12), wherein the integrated planar antenna (22) comprises a grounding section (22c) and a feeding section (22b);
an antenna jack (27) is provided for coupling either the planar antenna or an external antenna for the radio module to the active circuitry (14), wherein the antenna jack (27) comprises a ground section (27b) and a signal section (27a) electrically insulated from the ground section (27b), wherein the ground section (27b) and the signal section (27a) of the antenna jack (27) are disposed on the same level of the board (12) on which the planar antenna (22) is disposed;
a removable coupling element (30) for connecting, in an electrically conductive way, the signal section (27a) of the antenna jack (27) with the feeding section (22b) of the planar antenna (22) is provided to couple the active circuitry (14) to the planar antenna (22); and
a shielding (26, 28) for shielding the active circuitry (14) is provided, wherein the shielding comprises a ground frame (26) which does not surround the planar antenna (22) and which is disposed on the same level of the board (12) on which the planar antenna (22) is disposed, wherein the ground frame (26) is connected with the grounding section (22c) of the planar antenna (22) as well as with the ground section (27b) of the antenna jack (27) in an electrically conductive way.

2. Radio module (10) according to claim 1, wherein a metallic case cap (28) is provided, which is connected with the ground frame (26) in an electrically conductive way.

3. Radio module (10) according to claim 1 or 2, wherein the board (12) comprises a strip line (20), by which the feeding section (27a) of the antenna jack (27) and the active circuitry (14) are connected.

4. Radio module according to claim 1, wherein a gap exists between the signal section (27a) and the feeding section (22b) of the planar antenna (22), which may be bypassed by the removable coupling element in the form of a bridge (30).

5. Radio module (10) according to one of the preceding claims, wherein the planar antenna (22) is an inverted F antenna which comprises a further section (22a) in a direction, wherein the feeding section and the grounding section are substantially perpendicular thereto and extend in a direction perpendicular to this direction.

6. Radio module (10) according to claim 5, wherein the shielding (26, 28) is part of the case of the radio module (10) and wherein the inverted F antenna (22) is formed such that the further section (22a) extends substantially in parallel to a side of the case.

7. Radio module according to one of the preceding claims, wherein the active circuitry (14) and the planar antenna (22) are formed such that radio frequencies between 1800 MHz and 2000 MHz and particularly between 1880 MHz and 1900 MHz are usable.

8. Radio module (10) according to one of claims 3 to 7, wherein the board (12) is a multi-layer board, wherein the planar antenna (22) is formed on a layer of the multi-layer board forming a main surface of the multi-layer board (12), wherein the ground frame (26) is also formed on the main surface of the multi-layer board (12), and wherein the strip line (20) is formed on another layer of the board (12) and is connected with the feeding section (27a) of the antenna jack (27) via a via.

## Revendications

1. Module d'émission-réception (10) destiné à fonctionner selon la norme DECT ou un dérivé de celle-ci, aux caractéristiques suivantes:
une plaque (12);
un aménagement de circuit actif (14) disposé sur la plaque (12); et
une antenne (22),
**caractérisé par le fait que**
l'antenne (22) est une antenne plane intégrée (22) qui est réalisée sous forme de structure de métallisation sur et/ ou dans la plaque (12), l'antenne plane intégrée (22) présentant un segment de mise à la terre (22c) et un segment d'alimentation (22b);
une douille d'antenne (27) étant prévue pour coupler soit l'antenne plane, soit une antenne extérieure pour le module d'émission-réception à l'aménagement de circuit actif (14), la douille d'antenne (27) présentant un segment de masse (27b) et un segment de signal (27a) isolé électriquement du segment de masse (27b), le segment de masse (27b) et le segment de signal (27a) de la douille d'antenne (27) étant disposés sur le même plan de la plaque (12) sur lequel est disposée l'antenne plane (22);
un élément de couplage amovible (30) étant prévu pour relier de manière électroconductrice le segment de signal (27a) de la douille d'antenne (27) au segment d'alimentation (22b) de l'antenne plane (22), afin de coupler l'aménagement de circuit actif (14) à l'antenne plane (22); et
une protection (26, 28) étant prévue pour protéger l'aménagement de circuit actif (14), la protection présentant un cadre de masse (26) qui n'entoure pas l'antenne plane (22) et qui est disposé sur le même plan de la plaque (12) sur lequel est disposée l'antenne plane (22), le cadre de masse (26) étant relié de manière électroconductrice tant au segment de mise à la terre (22c) de l'antenne plane (22) qu'au segment de masse (27b) de la douille d'antenne (27).

2. Module d'émission-réception (10) selon la revendication 1, dans lequel est prévu un couvercle de boîtier métallique (28) qui est relié de manière électroconductrice au cadre de masse (26).

3. Module d'émission-réception (10) selon la revendication 1 ou 2, dans lequel la plaque (12) présente une ligne en forme de ruban (20) par laquelle sont reliés le segment d'alimentation (27a) de la douille d'antenne (27) et l'aménagement de circuit actif (14).

4. Module d'émission-réception selon la revendication 1, dans lequel est présent, entre le segment de signal (27a) et le segment d'alimentation (22b) de l'antenne plane (22), un espace intermédiaire pouvant être surplombé par l'élément de couplage amovible sous forme de pont (30).

5. Module d'émission-réception (10) selon l'une des revendications précédentes, dans lequel l'antenne plane (22) est une antenne en forme de F inversée qui présente un autre segment (22a) dans une direction, le segment d'alimentation et le segment de mise à la terre étant sensiblement perpendiculaires à ce dernier et s'étendant dans une direction perpendiculaire à cette direction.

6. Module d'émission-réception (10) selon la revendication 5, dans lequel la protection (26, 28) fait partie du boîtier du module d'émission-réception (10), et dans lequel l'antenne en forme de F inversée (22) est réalisée de sorte que l'autre segment (22a) s'étende sensiblement parallèle à un côté du boîtier.

7. Module d'émission-réception selon l'une des revendications précédentes, dans lequel l'aménagement de circuit actif (14) et l'antenne plane (22) sont réalisés de sorte que puissent être utilisées des fréquences de radiocommunication entre 1800 MHz et 2000 MHz et, en particulier, entre 1880 MHz et 1900 MHz.

8. Module d'émission-réception (10) selon l'une des revendications 3 à 7, dans lequel la plaque (12) est une plaque à couches multiples, dans lequel l'antenne plane (22) est réalisée sur une couche de la plaque à couches multiples formant une surface principale de la plaque à couches multiples (12), dans lequel le cadre de masse (26) est également réalisé sur la surface principale de la plaque à couches multiples (12), et dans lequel la ligne en forme de ruban (20) est réalisée sur une autre couche de la plaque (12) et est reliée par l'intermédiaire d'une connexion transversale au segment d'alimentation (27a) de la douille d'antenne (27).
